# DEMANDE DE BREVET EUROPEEN

(11) **EP 0 532 372 A1**
(43) Date de publication de la demande: **17.03.1993**
(21) Numéro de dépôt: 92402198.3
(22) Date de dépôt: 30.07.1992
(51) Int. Cl.: B25J 5/00, B23P 21/00

(54) **Atelier flexible de montage d'un produit**

(30) Priorité: 11.09.1991 FR 9111400
(71) Demandeur: AUTOMOBILES PEUGEOT, F-75116 Paris (FR); AUTOMOBILES CITROEN, F-92200 Neuilly sur Seine (FR)
(72) Inventeur: Guillon, Luc, F-75016 Paris (FR)
(74) Mandataire: Robert, Jean-François

(57) **Abrégé**

La présente invention a pour objet un atelier flexible de montage d'un produit, par exemple une porte de véhicule automobile comportant une série de postes fixes (1) approvisionnés en éléments du produit disposés dans des conteneurs (2) et une série de chariots automoteurs (1) défilant devant les conteneurs (2).

Selon l'invention, chaque chariot (1) comporte au moins un robot (11) et des moyens informatiques (16) propres à commander le robot de façon qu'à chaque poste il saisisse un élément dans le conteneur (2) correspondant et effectue son montage sur le produit (6).

## Description

La présente invention concerne un atelier flexible pour le montage d'un produit tel que par exemple une porte de véhicule automobile.

Cet atelier comporte une série de postes fixes approvisionnés en éléments du produit disposés dans des conteneurs et une série de chariots automoteurs défilant devant les conteneurs et est caractérisé en ce que chaque chariot comporte au moins un robot et des moyens informatiques propres à commander le robot de façon qu'à chaque poste il saisisse un élément dans le conteneur correspondant et effectue son montage sur le produit.

On a décrit ci-après, à titre d'exemple non limitatif, un mode de réalisation de l'atelier de montage selon l'invention, avec référence aux dessins annexés dans lesquels :

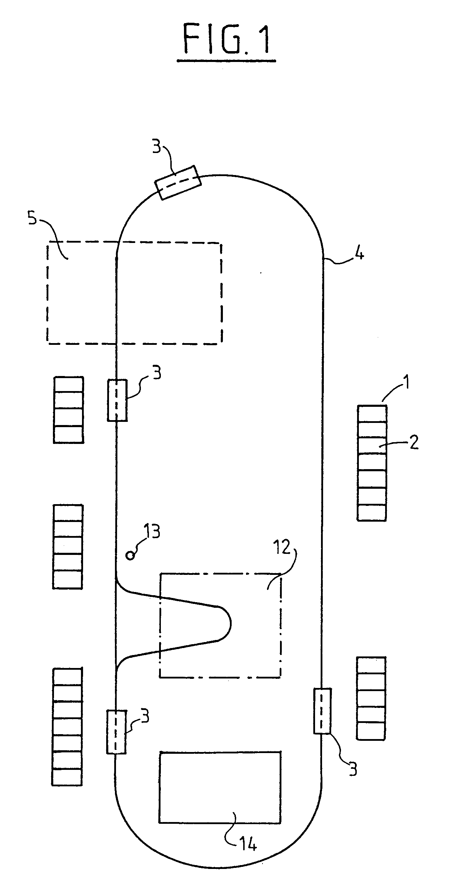

La Figure 1 est une vue en plan de l'atelier;

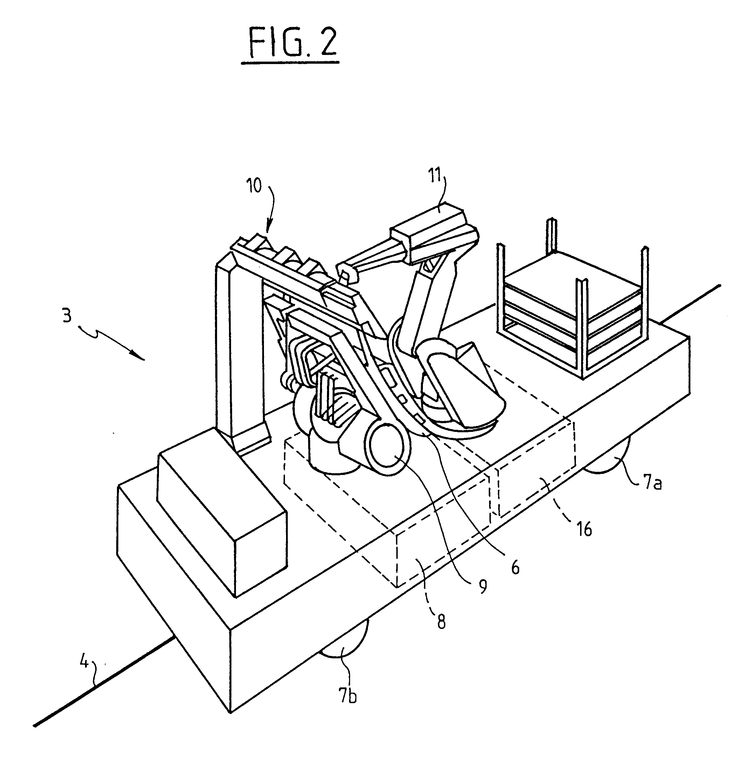

La Figure 2 est une vue en perspective d'un chariot;

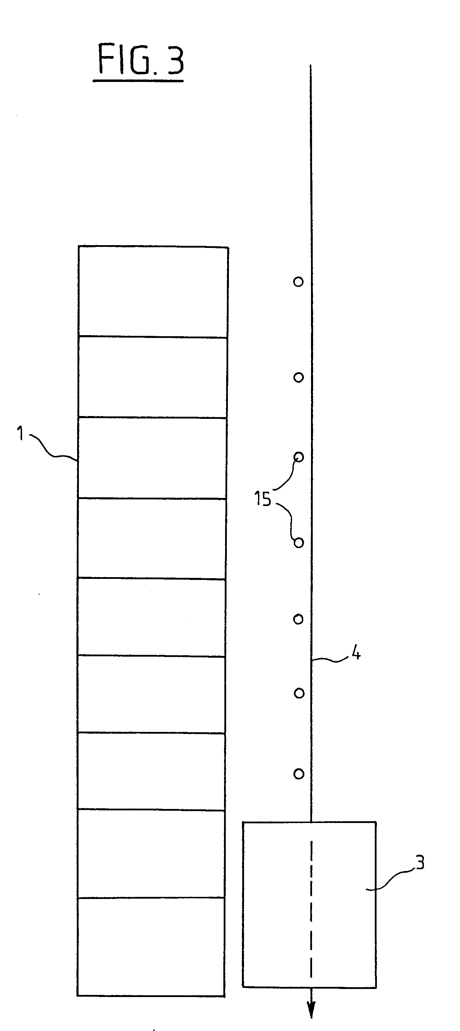

La Figure 3 est un schéma montrant la disposition des balises magnétiques.

Tel qu'il est représenté aux dessins, l'atelier flexible comporte une série de postes fixes 1 à chacun desquels se trouvent des conteneurs 2 formés d'une série d'intercalaires thermoformés empilés verticalement et contenant l'un des éléments à monter sur un produit; par exemple dans le cas d'une porte de véhicule, ces intercalaires contiennent respectivement des serrures, des lève-vitres, des rétroviseurs, des vitres, et des faisceaux de câbles. Des chariots automoteur 3 peuvent défiler devant ces postes suivant un trajet sans fin par exemple matérialisé par un fil conducteur de guidage 4 noyé dans le sol. Sur ce trajet se trouve une zone d'échange 5 où arrivent des produits 6 devant recevoir les éléments et d'où partent les produits finis.

Chaque chariot 3 est monté sur roues 7a et 7b qui peuvent être entraînées par un moteur électrique alimenté par un ensemble de batteries 8; les roues avant 7a peuvent être orientées par des moyens non représentés au dessin. Il porte un support rotatif 9 sur lequel peut être placé un produit 6, un ensemble de préhenseurs et d'outils 10 et un robot d'assemblage 11 sur le poignet duquel peut être fixé l'un des préhenseurs ou outils 10.

Chaque chariot 3 est guidé par le fil 4 qui est alimenté par un courant de fréquence donnée. A cet effet, le chariot est muni d'antennes inductives et le signal capté commande son train directeur. Il est également muni de capteurs d'odométrie lui permettant de connaître à tous moments sa position dans l'atelier; cela permet au chariot de quitter le fil de guidage pour suivre des trajectoires pré-programmées non matérialisées au sol, par exemple pour aller dans une zone de maintenance 12. Des balises de repérage 13 peuvent être noyées dans le sol pour permettre au chariot de se repérer sur le circuit, notamment à l'approche d'un aiguillage.

L'atelier comporte un système informatique central 14. Des balises magnétiques 15 sont disposées chacune au droit d'un poste 1, chaque balise contient les informations pour localiser les pièces stockées dans le conteneur. De son côté chaque chariot 3 comporte des moyens informatiques 16 qui sont commandés par les balises et propres à actionner le robot 11. Ces moyens informatiques sont par ailleurs reliés au système informatique central par une communication sans fil, radio ou infrarouge.

En fonctionnement, chacun des chariots 3 suit le trajet défini par le fil de guidage 4. A chaque poste 1, il s'arrête et prélève dans le conteneur 2 l'un des éléments qui s'y trouve; puis le chariot repart et, pendant le déplacement vers le poste 1 suivant, le robot 11 effectue le montage de l'élément sur le produit 6. Puis le robot 11 change de préhenseur et prélève dans l'ensemble 10 le préhenseur convenant à l'élément suivant à saisir.

Il va de soi que la préente invention ne doit pas être considérée comme limitée au mode de réalisation décrit et représenté, mais en couvre, au contraire, toutes les variantes. Il peut être prévu sur le trajet des chariots 3 des rails ou des caténaires sur lesquels les chariots peuvent se brancher provisoirement pour recharger leurs batteries 8.

## Revendications

1. Atelier flexible de montage d'un produit, par exemple une porte de véhicule automobile comportant une série de poste fixes (1) approvisionnés en éléments du produit disposés dans des conteneurs (2) et une série de chariots automoteurs (3) défilant devant les conteneurs (2),
caractérisé en ce que chaque chariot (3) comporte au moins un robot (11) et des moyens informatiques (16) propres à commander le robot de façon qu'à chaque poste il saisisse un élément dans le conteneur (2) correspondant et effectue son montage sur le produit (6).

2. Atelier selon la revendication 1,
caractérisé en ce que chaque chariot (3) comporte son propre moteur électrique d'entraînement alimenté par un ensemble de batteries (8).

3. Atelier selon la revendication 1 ou 2,
caractérisé en ce que chaque chariot (3) comporte une série de préhenseurs et d'outils (10) et des moyens (16) propres à actionner le robot (11) de façon qu'il saisisse le préhenseur correspondant à l'élément à monter.

4. Atelier selon la revendication 3,
caractérisé en ce que les moyens de commande (16) du robot sont des moyens informatiques.

5. Atelier selon la revendication 4,
caractérisé en ce que les moyens informatiques (16) communiquent avec un système informatique central fixe (14).

6. Atelier selon la revendication 5,
caractérisé en ce que les moyens informatiques (16) communiquent avec le système informatique central par l'intermédiaire d'une liaison sans fil, radio ou infrarouge.

7. Atelier selon l'une quelconque des revendications précédentes,
caractérisé en ce que les éléments à monter sont disposés dans des intercalaires thermoformés (2) empilés verticalement.

8. Atelier selon l'une quelconque des revendications précédentes,
caractérisé en ce que le trajet des chariots (3) est matérialisé par un fil conducteur (4) alimenté par un courant de fréquence donné et en ce que chaque chariot est muni d'une antenne inductive qui capte le signal fourni par le fil et commande le train directeur du chariot.

9. Atelier selon l'une quelconque des revendications précédentes,
caractérisé en ce que chaque chariot comporte des capteurs coopérant avec des balises de repérage (13) pour lui faire suivre une trajectoire pré-programmée.

10. Atelier selon l'une quelconque des revendications précédentes,
caractérisé en ce qu'il comporte une zone d'échange où arrivent les produits (6) devant recevoir les éléments et d'où partent les produits finis.

11. Atelier selon l'une quelconque des revendications précédentes,
caractérisé en ce qu'il est prévu sur le trajet des chariots (3) des rails ou des caténaires sur lesquels les chariots peuvent se brancher provisoirement pour recharger leurs batteries (8).
